Europäisches Patentamt

European Patent Office

Office européen des brevets

(19)

(11) Publication number: **0 363 517 B1**

# EUROPEAN PATENT SPECIFICATION

(12)

(45) Date of publication of patent specification: **24.03.93** (51) Int. Cl.5: **G01D 5/48**

(21) Application number: **88117099.7**

(22) Date of filing: **14.10.88**

(54) **Distance measuring apparatus and method.**

(43) Date of publication of application:
**18.04.90 Bulletin 90/16**

(45) Publication of the grant of the patent:
**24.03.93 Bulletin 93/12**

(84) Designated Contracting States:
**DE FR GB**

(56) References cited:
**EP-A- 0 130 578**
**FR-A- 2 523 719**

**PATENT ABSTRACTS OF JAPAN, vol. 10, no. 7 (P-419)[2064], 11th January 1986; & JP-A-60 164 214 (WAKOMU K.K.) 27-08-1985**

**PATENT ABSTRACTS OF JAPAN, vol. 6, no. 84 (P-117)[962], 22nd May 1982; & JP-A-57 22 512 (COPAL K.K.) 05-02-1982**

(73) Proprietor: **ROBERT BOSCH GMBH**
**Postfach 30 02 20**
**W-7000 Stuttgart 30(DE)**

(72) Inventor: **Gerlach, Günter**
**Fliederweg 8**
**W-7550 Rastatt(DE)**

Rank Xerox (UK) Business Services
(3.10/3.5x/3.0.1)

**Description**

This invention relates to the measurement of distances, and to a method of doing so. It is particularly applicable to very accurate measurements, for example of the travel of a moving part of a machine.

It is often necessary to be able to measure very exactly (to an accuracy of less than 10 $\mu$m) the position of, for example, a piston of an operating cylinder, or of the tool head of a machine tool. The movement may be up to 2 metres. Various methods of doing this are known.

Commonly, a graduated glass rod is used with optical read-off means. Divisions are at 40 $\mu$m intervals and the resolution is 10 $\mu$m. But the rods are very expensive, easily broken, and become dirty. In addition, the tolerance to relative movement perpendicularly between the glass rod and the sensor means is low ( $\pm$ 3/10 mm) and this can be a practical difficulty.

Laser interferometers are very accurate but too expensive for such applications.

A further method involves the use of a magnetic strip mounted on the bed of the machine and a position magnet on the movable part which defines its current position by altering the magnetic properties of the strip at that point. If a magnetic pulse (magnetostrictive vibration wave) is injected by a coil or a magnetic head at one end of the strip, an electrical pulse is generated in a coil surrounding the strip at the moment the magnetic pulse reaches the position with altered magnetic properties. By timing the occurrence of this electrical pulse, a measure of the distance by the magnetic pulse is obtained.

The FR-A-2 523 719 discloses a sensor for measuring linear displacements. The sensor contains a magnetostrictive core with a coil, wound around the core. A magnetism generator is movable near the core, this magnetism generator indicates the displacement to be measured. A means for sending and receiving hf-pulses is connected to one end of the coil, at the other end an impedance is connected.

The magnetism generator effects a local saturation of the magnetostrictive core and the hf-pulses were reflected partially in this saturated region. The other part of the-hf pulses is reflected at the end of the core. Both reflected pulses are received in the means for sending and receiving hf-pulses. By measuring the difference between the travel times, the position of the magnetism generator can be calculated.

By using a core with special regions of magnetic saturation, the temperature dependence can be held small.

A position detector with a position designating rod magnet and a magnetostriction transmitting medium is known from "Patent Abstracts of Japan of JP-A-60 164 214" or from the EP-A1-0 130 578.

The detector has at least one magnetostrictive transmission medium and a first and a second coil wound around the medium in a such manner, that signals can be exchanged between the coils. The first coil generates a magnetostrictive vibration wave, which is propagated through the medium and creates a signal in the second coil, when the vibration wave is near the rod magnet. The time between the two signals is computed to detect the position of the rod.

In an embodiment, which is only described in the JP-A-60 164 214, the position of the rod is calculated by measuring the time intervall between the first signal, induced in the second coil, when the magnetostriction vibration wave passes the rod and the signal, induced by the reflected signal.

The methods known from the JP-A-60 164 214 or from the EP-A1-0 130 578 are not accurate enough, because over a 2 metre strip length, the temperature coefficient of for example permalloy means there is a difference in the strip length of 2.4 mm if the temperature changes by 80° C.

The method known from the FR-A-2 523 719 needs a very special arrangement for the core and is therefore too much expended.

The invention proposes a method as set out in claim 1.

The second pulse may be injected independently at the other end of the strip, or be the first pulse which continues past said point and is reflected from the far end of the strip.

The invention also proposes an apparatus as set out in claim 4.

Several exemplary embodiments of the invention will now be described with reference to the accompanying drawings, in which:

Fig.1 shows the known device for measuring distance;

Fig.2 shows the voltage traces in the circuits;

Fig.3 shows a first version of the device according to the invention; and

Fig.4 shows the voltage traces using a modified form of the invention; and

Fig.5 shows production of the device by deposition techniques.

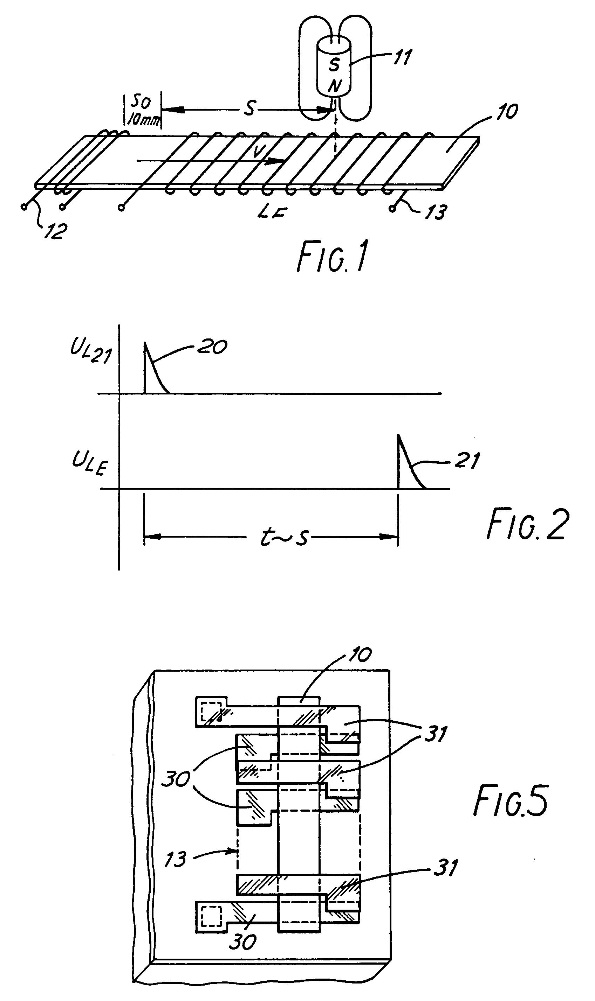

In Fig.1, which is a known arrangement an amorphous metal (permalloy) strip 10 is fixed to the bed of the machine of which the movable member e.g. a piston, is to have its position monitored. Attached to the piston is a position magnet 11. The strip 10 is long enough that the magnet 11 remains in association with it over its full path of movement.

At one end, the strip has a pulse injection coil 12 while the remainder of its length is wound with a receiver coil 13.

The magnet 11 alters the magnetic characteristics of the strip 10 in its immediate vicinity. Detection of the exact position of this alteration therefore gives a measure of the position of the magnet and of the member to which it is attached.

A voltage pulse 20 (Fig.2) is applied to the injection coil 12. This produces a sudden magneto-accoustic pulse in the strip 10 which propagates along the latter at a speed V. So long as the pulse magnitude and speed are constant, there is no noticeable voltage generated across the terminals of receiver coil 13. Once the pulse reaches the region of altered magnetic characteristics due to magnet 11, a voltage pulse 21 appears in coil 13. The time elapsed t between pulses 20 and 21 is proportional to the distance S between coil 12 and magnet 11.

However, as pointed out at the start, the extension $\Delta S(\vartheta)$ due to a temperature change of $\vartheta°$ reduces the accuracy of this measurement to an unacceptable degree, and means is required to compensate for this.

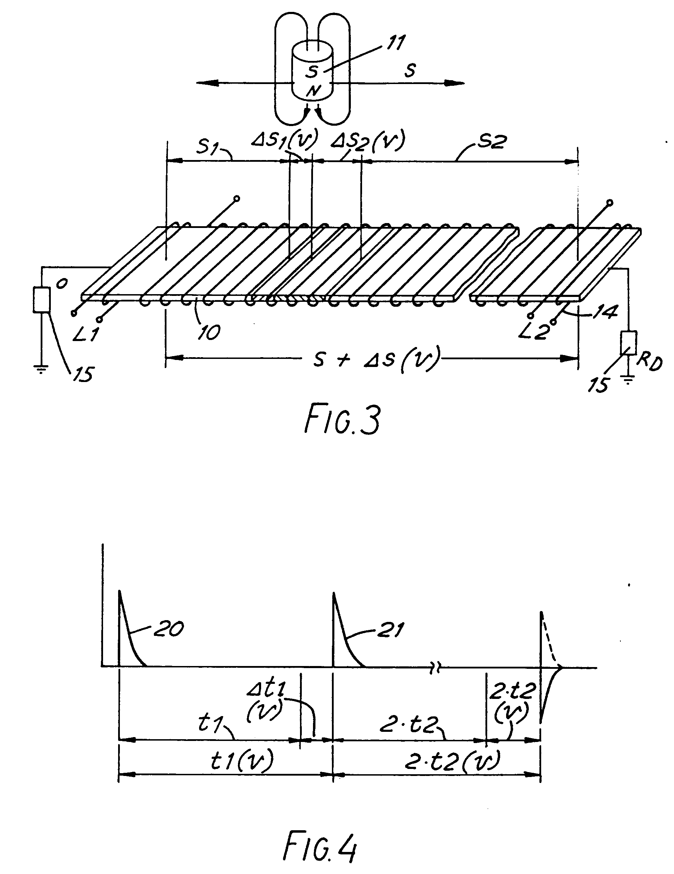

A first solution to this problem is illustrated in Fig.3. The apparatus is similar to Fig.1, but has in addition a second injection coil 14 at the opposite end of the strip 10. Further, the strip is terminated at each end with its characteristic impedance 15. This is to eliminate reflections of the magneto-acoustic pulse when it reaches the end of the strip.

In Fig.3, the effect of the temperature extension is illustrated. The total (known) length S has an extension of $\Delta S(\vartheta)$, made up of the extension $\Delta S1(\vartheta)$ of S1 to the left of the position magnet 11, and $\Delta S2(\vartheta)$ of S2 to the right.

Pulses are initiated in both injection coils 12 and 14 alternately, and the times t1 and t2 measured as in Fig.1, for distances S1 and S2 from the opposite ends of the strip 10. These times are in reality of magnitude $t1 + \Delta t1(\vartheta)$ and $t2 + \Delta t2(\vartheta)$. The measurements are then employed as follows.

The temperature extension is:

$$\Delta S\vartheta = [S1(\vartheta) + S2(\vartheta)] - S \qquad (1)$$

Moreover:

$$S1(\vartheta) = S1 + S1 . \frac{\Delta S(\vartheta)}{S} \qquad (2)$$

Solved for S1 :

$$S1 = \frac{S1(\vartheta)}{1 + \frac{\Delta S(\vartheta)}{S}} \qquad (3)$$

Inserting (1) in (3)

$$S1 = \frac{S1(\vartheta)}{S1(\vartheta) + S2(\vartheta)} . S \sim \frac{t1(\vartheta)}{t1(\vartheta) + t2(\vartheta)} . S \qquad (4)$$

Thus, measurement of the actual values of $t1(\vartheta)$ and $t2(\vartheta)$, without discrimination as to the value of $\Delta t1(\vartheta)$ or $\Delta t2(\vartheta)$ gives an exact value of s1 from equation (4), S being known. There is thus no need to know the pulse velocity V, or its corrected value $V(\vartheta)$.

It is also possible to use the apparatus of Fig.1, but a different method. In this case, the second injection coil 14 is not required, nor the termination 15. The reflected pulse is used to provide t2 as illustrated in Fig.4. $t1(\vartheta)$ is measured as before, but $t2(\vartheta)$ appears as $2.t2(\vartheta)$, being the time after $t1(\vartheta)$ for the pulse to travel the right-hand end of the strip 10 and back to magnet 11. Equation (4) is then used as before.

The physical realisation of the strip 10 and coil 13 can most conveniently be by deposition techniques for thin films. Figure 5 illustrates the production in three masked deposition stages, with insulation layers above and below the strip 10. Underneath strips 30 are deposited first; strip 10 next; and strips 31 last. Only the overlying areas of strips 30 and 31 make electrical contact.

**Claims**

1. A method of measuring distance along an elongate strip (10) comprising the steps of causing the magnetic properties of the strip (10) to be varied at the point along the strip to be measured by a position magnet (11) injecting a first magneto-acoustic pulse (20), generated in an injection coil (12), wound around the strip (10), at one end of the strip (10) and detecting the time t1 at which the pulse reaches said point, causing a second magneto-acoustic pulse to pass along the strip from its other end and the first and the second magneto-acoustic pulses are detected in a second coil, characterised in that the second coil is a receiver coil (13), wound around the strip (10) and a time t2 is measured corresponding to the time required for that pulse to reach said point, and the times t1 and t2 are used to calculate the position of said point independently of any expansion of the strip (10) due to temperature variations.

2. A method according to claim 1 wherein said second pulse (21) is independently injected at the other end of the strip.

3. A method according to claim 1 wherein said second pulse is the first pulse (20) which continues past said point to reach the other end of the strip (10) where it is reflected, the time 2 x t2 being measured subsequent to t1, from which t2 ist determined.

4. Apparatus for measuring distance, using the method of claim 2, comprising a magnetic strip (10) carrying an injection coil (12) wound around the strip (10) at each end, a detector coil (13) wound around the strip (10) along a substantial part of its length, a magnet movable (11) along the strip in proximity so as to vary the magnetic properties of the strip in its vicinity, means for pulsing the two injection coils, and means for detecting signal pulses occurring in the detector coil (13).

**Patentansprüche**

1. Verfahren zur Entfernungsmessung entlang einem länglichen Streifen (10) mit den Schritten: Veranlassen einer Änderung der magnetischen Eigenschaften des Streifens (10) an der Stelle des Streifens, die durch einen Positionsmagneten (11) gemessen werden soll, Einspeisen eines ersten magnetoakustiscen Impulses (20), der in einer Einspeisungsspule (12) erzeugt wird, die an einem Ende des Streifens (10) um den Streifen (10) gewickelt ist, und Erfassen der Zeit t1, zu der der Impuls den erwähnten Punkt erreicht, Veranlassen, daß ein zweiter magnetoakustischer Impuls den Streifen von seinem anderen Ende her durchläuft und daß die ersten und zweiten magnetoakustischen Impulse in einer zweiten Spule erfaßt werden, dadurch gekennzeichnet, daß die zweite Spule eine Empfängerspule (13) ist, die um den Streifen (10) gewickelt ist, und eine Zeit t2 entsprechend der Zeit, die der betreffende Impuls braucht, um den erwähnten Punkt zu erreichen, gemessen wird, und die Zeiten t1 und t2 zum Berechnen der Position der erwähnten Stelle, unabhängig von einer etwaigen Ausdehnung des Streifens (10) infolge von Temperaturänderungen, benutzt werden.

2. Verfahren nach Anspruch 1, dadurch gekennzeichnet, daß der erwähnte zweite Impuls (21) am anderen Ende des Streifens unabhängig eingespeist wird.

3. Verfahren nach Anspruch 1, dadurch gekennzeichnet, daß der erwähnte zweite Impuls der erste Impuls (20) ist, der über die erwähnten Stelle hinaus läuft, das andere Ende des Streifens (10) erreicht und dort reflektiert wird, wobei die Zeit 2 x t2 anschließend an t1 gemessen wird und daraus Bestimmung von t2 erfolgt.

4. Vorrichtung zur Entfernungsmessung nach dem Verfahren von Anspruch 2, mit einem Magnetstreifen (10), der eine um den Streifen (10) gewickelte Einspeisungsspule (12) an jedem Ende trägt, einer Detektorspule (13), die um den Streifen (10) über einen erheblichen Teil der Länge desselben gewickelt ist, einem Magneten (11), der entlang dem Streifen in dessen Nähe zum Variieren der magnetischen Eigenschaften des Streifens in seiner Umgebung beweglich ist, Mitteln zur Impulsansteuerung der zwei Einspeisungsspulen und Mitteln zum Erfassen der Signalimpulse in der Detektorspule (13).

**Revendications**

1. Méthode pour mesurer la distance le long d'une bande allongée (10), cette méthode comprenant les étapes suivantes :
   - on fait varier les propriétés magnétiques de la bande (10) au point à mesurer le long de la bande par un aimant de position (11) en injectant une première impulsion magnéto-acoustique (20) produite dans une bobine d'injection (12) qui entoure la bande (10) à une extrémité de la bande (10) et en détectant le temps t1 auquel l'impulsion atteint ce point,
   - en faisant passer une seconde impulsion magnéto-acoustique le long de la bande à partir de l'autre extrémité de celle-ci, la première et la seconde impulsion magnéto-acoustique étant détectées dans une seconde bobine,
   méthode caractérisée en ce que la seconde bobine est une bobine réceptrice (13) enroulée autour de la bande (10) et un temps t2 est mesuré qui correspond au temps nécessaire pour que cette impulsion atteigne ce point, et les temps t1 et t2 sont utilisés pour calculer la position de ce point indépendamment de toute extension de la bande (10) dûe aux variations de température.

2. Méthode selon la revendication 1, caractérisée en ce que la seconde impulsion (21) est injectée indépendamment à l'autre extrémité de la bande.

3. Méthode selon la revendication 1, caractérisée en ce que cette seconde impulsion est la première impulsion (20) qui continue au-delà de ce point pour atteindre l'autre extrémité de la bande (10) où elle est réfléchie, le temps 2 x t2 étant mesuré et t2 est déterminé à partir de cette mesure.

4. Dispositif pour mesurer la distance en utilisant la méthode selon la revendication 2, dispositif caractérisé en ce qu'il comporte une bande magnétique (10) portant une bobine d'injection (12) enroulée autour de la bande (10) à chaque extrémité, une bobine détectrice (13) enroulée de la bande (10) le long d'une partie substantielle de la longueur de celle-ci, un aimant (11) susceptible de se déplacer le long de la bande à proximité de celle-ci, de façon à faire varier les propriétés magnétiques de la bande à son voisinage, des moyens pour produire des impulsions dans les deux bobines d'injection, et des moyens pour détecter le signal d'arrivée des impulsions dans la bobine détectrice (13).

FIG.1

FIG.2

FIG.5

FIG.3

FIG.4